# EUROPÄISCHE PATENTSCHRIFT

(11) **EP 1 784 737 B1**
(45) Veröffentlichungstag und Bekanntmachung des Hinweises auf die Patenterteilung: **15.12.2010**
(21) Anmeldenummer: 05776915.0
(22) Anmeldetag: 27.06.2005
(51) Int. Cl.: G06F 13/40

(54) **KOMMUNIKATIONSBAUSTEIN MIT EINEM KOMMUNIKATIONSSCHNITTSTELLENELEMENT UND KOMMUNIKATIONSSCHNITTSTELLENELEMENT**
COMMUNICATIONS MODULE COMPRISING A COMMUNICATIONS INTERFACE ELEMENT, AND COMMUNICATIONS INTERFACE ELEMENT
MODULE DE COMMUNICATION COMPRENANT UN ELEMENT D'INTERFACE DE COMMUNICATION ET ELEMENT D'INTERFACE DE COMMUNICATION

(30) Priorität: 27.08.2004 DE 102004041823
(43) Veröffentlichungstag der Anmeldung: 16.05.2007
(73) Patentinhaber: ROBERT BOSCH GMBH, 70442 Stuttgart (DE)
(72) Erfinder: HARTWICH, Florian, 72762 Reutlingen (DE)
(86) Internationale Anmeldenummer: PCT/EP2005/052986
(87) Internationale Veröffentlichungsnummer: WO 2006/024558

(56) Entgegenhaltungen:
- EP-A- 1 189 393
- DE-A1- 10 211 285
- US-A- 5 703 875
- EKIZ ET AL: "Performance Analysis of a CAN/CAN Bridge" PROCEEDINGS OF THE INTERNATIONAL CONFERENCE ON NETWORK PROTOCOLS, 29. Oktober 1996 (1996-10-29), Seiten 181-188, XP002104040

## Beschreibung

### Stand der Technik

Die Erfindung betrifft einen Kommunikationsbaustein zur Kopplung einer Kommunikationsverbindung, insbesondere eines Busses, mit einem, dem Kommunikationsbaustein zugeordneten Teilnehmer, sowie ein entsprechendes Kommunikationsschnittstellenelement gemäß den Oberbegriffen der unabhängigen Ansprüche 1 und 7 und eine Anordnung mit wenigstens zwei Kommunikationsbausteinen gemäß den nicht aus dem Stand der Technik bekannten Merkmale nach Anspruch 8. Weiterhin betrifft die Erfindung ein Verfahren zum Austausch von Daten und/oder Botschaften zwischen wenigstens zwei Kommunikationsbausteinen gemäß dem Oberbegriff von Anspruch 10.

Die Vernetzung von Steuergeräten, Sensorik und Aktuatorik mithilfe eines Kommunikationssystems bestehend aus einer Kommunikationsverbindung, insbesondere einem Bus, und entsprechenden Kommunikationsbausteinen, hat in den letzten Jahren beim Bau von modernen Kraftfahrzeugen oder auch im Maschinenbau, insbesondere im Werkzeugmaschinenbereich als auch in der Automatisierung drastisch zugenommen. Synergieeffekte durch Verteilung von Funktionen auf mehrere Teilnehmer, insbesondere Steuergeräte, können dabei erzielt werden. Man spricht hierbei von verteilten Systemen. Solche verteilten Systeme oder Netzwerke bestehen somit aus den Teilnehmern und dem diese Teilnehmer verbindenden Bussystem oder mehreren verbindenden Bussystemen. Die Kommunikation zwischen verschiedenen Stationen bzw. Teilnehmern findet damit mehr und mehr über ein solches Kommunikationssystem oder Bussystem statt, über welches die zu übertragenden Daten in Botschaften übermittelt werden. Dieser Kommunikationsverkehr auf dem Bussystem, Zugriffs- und Empfangsmechanismen sowie Fehlerbehandlung werden über ein entsprechendes Protokoll geregelt.

Als Protokoll beispielsweise im Kfz-Bereich etabliert ist der CAN (Controller Area Network). Dieses ist ein ereignisgesteuertes Protokoll, d.h. Protokollaktivitäten wie das Senden einer Nachricht werden durch Ereignisse initiiert, die ihren Ursprung außerhalb des Kommunikationssystems haben. Der eindeutige Zugang zum Kommunikationssystem bzw. Bussystem wird über eine prioritätsbasierte Bitarbitrierung gelöst. Eine Vorraussetzung dafür ist, dass den zu übertragenden Daten und damit jeder Botschaft eine Priorität zugewiesen ist. Das CAN-Protokoll ist sehr flexibel; ein Hinzufügen weiterer Teilnehmer und Botschaften ist damit problemlos möglich, solange es noch freie Prioritäten (Message Identifier) gibt. Die Sammlung aller im Netzwerk zu sendenden Botschaften mit Prioritäten und deren sendenden bzw. empfangenden Teilnehmer bzw. den entsprechenden Kommunikationsbausteinen werden in einer Liste, der sogenannten Kommunikationsmatrix, abgelegt.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Botschaft werden nur durch das Fortschreiten einer für das gesamte Bussystem gültigen Zeit ausgelöst. Der Zugang zu diesem Medium basiert auf der Zuteilung von Zeitbereichen, in denen ein Sender exklusives Senderecht hat. Dabei ist die Botschaftsreihenfolge in der Regel schon vor Inbetriebnahme festzusetzen. Es wird also ein Fahrplan erstellt, der den Anforderungen der Botschaften bezüglich Wiederholrate, Redundanz, Deadlines usw. genügt. Man spricht vom sogenannten Bus-Schedule. Ein solches Bussystem ist beispielsweise der TTP/C.

Eine Verbindung der Vorteile beider genannter Busarten erfolgt im Lösungsansatz des zeitgesteuerten CAN, des sogenannten TTCAN (Time Triggered Controller Area Network). Dieser genügt den oben skizzierten Forderungen nach zeitgesteuerter Kommunikation sowie den Forderungen nach einem gewissen Maß an Flexibilität. Der TTCAN erfüllt dies durch den Aufbau der Kommunikationsrunde in sogenannten exklusiven Zeitfenstern für periodische Botschaften bestimmter Kommunikationsteilnehmer und in sogenannte arbitrierende Zeitfenster für spontane Botschaften mehrere Kommunikationsteilnehmer. TTCAN basiert dabei im Wesentlichen auf einer zeitgesteuerten, periodischen Kommunikation, die durch einen hauptzeitgebenden Teilnehmer bzw. Kommunikationsbaustein, den sogenannten Zeitmaster mit Hilfe einer Zeitreferenznachricht getaktet wird.

Eine weitere Möglichkeit verschiedene Übertragungsarten zu verbinden bietet das FlexRay-Protokoll, wodurch ein schnelles, deterministisches und fehlertolerantes Bussystem insbesondere für den Einsatz in einem Kraftfahrzeug beschrieben wird. Dieses Protokoll arbeitet nach dem Verfahren des Time-Division-Multiple-Access (TDMA), wobei den Teilnehmern bzw. den zu übertragenden Botschaften feste Zeitschlitze zugewiesen werden, in denen sie einen exklusiven Zugriff auf die Kommunikationsverbindung, den Bus haben. Die Zeitschlitze wiederholen sich dabei in einem festgelegten Zyklus, sodass der Zeitpunkt zu dem eine Botschaft über den Bus übertragen wird exakt vorausgesagt werden kann und der Buszugriff deterministisch erfolgt. Um die Bandbreite für die Botschaftsübertragung auf dem Bussystem optimal zu nutzen wird der Zyklus in einen statischen und einen dynamischen Teil unterteilt. Die festen Zeitschlitze befinden sich dabei im statischen Teil am Anfang eines Buszyklusses. Im dynamischen Teil werden die Zeitschlitze dynamisch vergeben. Darin wird nun der exklusive Buszugriff jeweils nur für eine kurze Zeit, sogenannte Minislots, ermöglicht.

Wie soeben dargestellt gibt es eine Vielzahl unterschiedlicher Übertragungstechnologien und damit Arten von Bussystemen. Häufig ist es so, dass mehrere Bussysteme gleicher oder unterschiedlicher Art miteinander verbunden werden müssen. Dazu dient eine Busschnittstelleneinheit, ein sogenanntes Gateway. Ein Gateway ist somit eine Schnittstelle zwischen verschiedenen Bussen, die von gleicher oder unterschiedlicher Art sein können, wobei das Gateway Botschaften von einem Bus auf einen oder mehrere andere Busse weiterleitet. Bekannte Gateways bestehen aus mehreren unabhängigen Kommunikationsbausteinen, wobei der Austausch von Botschaften dabei über die Prozessorschnittstelle (CPU-Interface) des jeweiligen Teilnehmers bzw. den entsprechenden Schnittstellenbaustein des jeweiligen Kommunikationsbausteins erfolgt. Dabei wird dieses CPU-Interface durch diesen Datenaustausch zusätzlich zu den zum Teilnehmer selbst zu übertragenden Botschaften stark belastet wodurch sich zusammen mit der sich daraus ergebenden Übertragungsstruktur eine relativ niedrige Datenübertragungsgeschwindigkeit ergibt. Weiterhin gibt es integrierte Kommunikationscontroller oder Kommunikationsbausteine, die sich einen gemeinsamen Botschaftsspeicher, das sogenannte Message-Memory, teilen und damit die Struktumachteile zu kompensieren. Allerdings sind solche integrierten Kommunikationsbausteine dadurch bezüglich der Datenübertragung sehr unflexibel und insbesondere auf eine bestimmte Anzahl von Busanschlüssen festgelegt.

Eine Variation diese Standes der Technik zeigt die US 5,703,875. Diese offenbart einen Schalter als Kommunikationselement mit einem ersten und zweiten Datenpfad, indem vom Input Port über eine Speicheranordnung mit zwei Pufferspeichern, mittels Multiplexer und Crossbar Daten und/oder Steuerinformationen an den Output Port ausgegeben werden. Hintergrund ist die gemeinsame Verwendung der gleichen Kommunikationsverbindungen für Daten und Steuerinformationen. Gleichzeitig können so Steuerinformationen mit höherer Priorität als Daten übertragen werden. Dazu können Steuerinformationen in Datenströme zwischenübertragen werden ohne den Datenstrom zu unterbrechen. Der Datenstrom wird dabei nur verzögert.

So zeigt sich, dass der Stand der Technik nicht in jeder Hinsicht optimale Ergebnisse zu liefern vermag.

Es ist daher die Aufgabe der Erfindung, einen Kommunikationsbaustein und ein Kommunikationsschnittstellenelement sowie ein Verfahren darzustellen, mit welchem der Austausch von Daten und/oder Botschaften verbessert werden kann.

### Vorteile der Erfindung

Dabei soll insbesondere der Austausch von Daten und/oder Botschaften zwischen mehreren Kommunikationsbausteinen ermöglich werden ohne das CPU-Interface stark zu belasten und ohne mehrere Botschaftsspeicher voneinander abhängig zu machen. Gleichzeitig soll insbesondere die Übertragungsgeschwindigkeit erhöht und die Übertragung flexibel ermöglicht werden.

Die genannte Aufgabe wird insbesondere durch Realisierung eines Kommunikationsschnittstellenelementes als spezielles Gateway-Interface gelöst, welches zwischen den Botschaftsspeichern, also in den entsprechenden Datenpfaden zwischengeschaltet wird und so einen neuen, zusätzlichen Datenpfad ermöglicht.

So zeigt die Erfindung zur Lösung der Aufgabe ein Kommunikationsschnittstellenelement und einen entsprechenden Kommunikationsbaustein, welcher einen Botschaftsspeicher enthält, wobei ein erster Datenpfad zu und von dem Botschaftsspeicher vorgesehen ist, über welchen Daten und/oder Botschaften zu dem und von dem Botschaftsspeicher geleitet werden, wobei vorteilhafter Weise das genannte Kommunikationsschnittstellenelement einen zusätzlichen zweiten Datenpfad im Kommunikationsbaustein bereitstellt und Schaltmittel enthält, welche derart ausgebildet sind, dass vorgebbare Daten und/oder Botschaften des ersten Datenpfades über den zusätzlichen zweiten Datenpfad geleitet werden.

Zweckmäßigerweise enthält dabei das Kommunikationsschnittstellenelement ein erstes Schaltmittel und ein zweites Schaltmittel, wodurch die Einleitung und/oder Ausleitung von vorgebbaren Daten und/oder Botschaften in oder aus dem ersten Datenpfad und/oder in oder aus dem zweiten Datenpfad ermöglicht wird.

Dabei ist das oder die Schaltmittel zweckmäßiger Weise als Multiplexbaustein ausgebildet.

Vorteilhafterweise ist dem Kommunikationsschnittstellenelement ein Steuerwerk zugeordnet, durch welches insbesondere das oder die Schaltmittel gesteuert werden. Dabei ist dieses Steuerwerk gemäß einer ersten Ausführungsform insbesondere im Kommunikationsschnittstellenelement selbst enthalten. Gemäß einer zweiten Ausführungsform kann das Steuerwerk aber auch zweckmäßigerweise im Kommunikationsbaustein oder auch gemäß einer dritten Ausführungsform in dem, dem Kommunikationsbaustein zugeordneten Teilnehmer untergebracht sein.

Dabei steuert das Steuerwerk die Übertragung bzw. Leitung der Daten und/oder Botschaften über den zweiten zusätzlichen Datenpfad bzw. gibt insbesondere vor, welche Daten und/oder Botschaften auf den zweiten Datenpfad geleitet werden und/oder vom zweiten Datenpfad in den entsprechenden Botschaftsspeicher, also auf den ersten Datenpfad übergeben werden.

Das genannte Steuerwerk entsprechend aller drei Ausführungsformen kann gleichermaßen in Software oder in Hardware realisiert sein.

Neben dem Kommunikationsschnittstellenelement zeigt die Erfindung vorteilhafterweise auch einen Kommunikationsbaustein eben insbesondere mit einem solchen Kommunikationsschnittstellenelement, wobei im Kommunikationsbaustein ein zusätzlicher zweiter Datenpfad vorgesehen ist und Schaltmittel enthalten sind, welche derart ausgebildet sind, das ausgebbare Daten und/oder Botschaften des ersten Datenpfades über den zusätzlichen zweiten Datenpfad geleitet werden.

Von besonderem Vorteil ist dabei, dass solche Kommunikationsbausteine sowie entsprechende Kommunikationsschnittstellenelemente es ermöglichen eine Anordnung mit wenigstens zweier solcher Kommunikationsbausteine als Gateway zu realisieren und die Kommunikationsbausteine über die zusätzlichen zweiten Datenpfade zu verbinden, diese insbesondere ringförmig aneinander zu binden und so eine schnelle und flexible Übertragung zu ermöglichen.

Des weiteren zeigt die Erfindung ein Verfahren zum Austausch von Daten und/oder Botschaften zwischen wenigstens zwei Kommunikationsbausteinen, welche jeweils einen Botschaftsspeicher enthalten, wobei Daten und/oder Botschaften zu dem und von dem Botschaftsspeicher über einen ersten Datenpfad in jedem Kommunikationsbaustein geleitet werden und vorteilhafter Weise ein zusätzlicher zweiter Datenpfad vorgesehen ist, über welchen vorgebbare Daten und/oder Botschaften des ersten Datenpfades geleitet werden, wobei die Kommunikationsbausteine über den bzw. die zweiten Datenpfade verbunden sind und so die vorgebbaren Daten und/oder Botschaften zwischen den Kommunikationsbausteinen ausgetauscht werden.

Durch die Erfindung ergeben sich somit die angestrebten Vorteile: Zum einen eine höhere Geschwindigkeit bei der Übertragung von Daten und/oder Botschaften über das Kommunikationsschnittstellenelement verglichen mit dem CPU-Interface sowie als weiteres eine sehr flexible und freie Konfigurierbarkeit der Übertragung; dies insbesondere auch durch eine sehr flexible und freie Vorgabe der Anzahl der Busanschlüsse verglichen mit einem integrierten Kommunikationsbaustein bzw. einem integrierten Gateway.

Weitere Vorteile und vorteilhafte Ausgestaltungen ergeben sich aus der Beschreibung sowie den Merkmalen der Ansprüche.

### Zeichnung

Die Erfindung wird im weiteren anhand der in der Zeichnung dargestellten Figur näher erläutert.

Dabei zeigt
Figur 1 einen Kommunikationsbaustein eines Bussystems, insbesondere eine CAN-Bussystems.
Figur 2 zeigt einen erfindungsgemäßen Kommunikationsbaustein mit einem Kommunikationsschnittstellenelement.
Figur 3 zeigt eine Anordnung mit mehreren miteinander verschalteten Kommunikationbausteinen, insbesondere als Gateway-Anwendung.

Die Erfindung wird im weiteren anhand der Ausführungsbeispiele näher erläutert.

### Ausführungsbeispiele

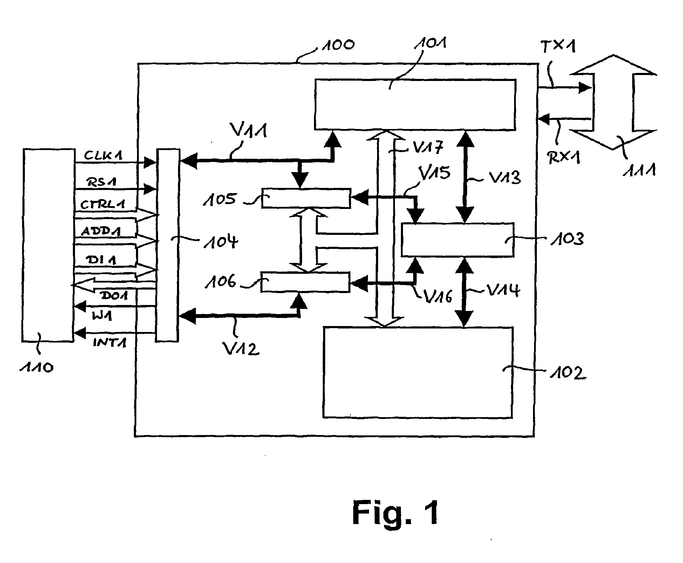

Figur 1 zeigt schematisch einen Kommunikationsbaustein 100 zur Anbindung eines Teilnehmers oder Hosts 110 bzw. dessen Ausführungseinheit der CPU an eine Kommunikationsverbindung bzw. einen Bus 111. Dazu ist der Kommunikationsbaustein 100 über einen Schnittstellenbaustein 104 mit dem Teilnehmer 110 respektive als Teil des CPU-Interfaces mit der CPU des Teilnehmers 110 verbunden. Damit ist mit CLK1 ein Takteingang (Clock) bezeichnet, mit RS1 ein Reseteingang, mit CTRL1 ein Controll- oder Steuereingang, mit ADD1 ein Adresseingang, mit DI1 ein Dateneingang und mit DO1 ein Datenausgang sowie mit W1 ein Ausgang der ein Wartesignal (Wait) bereitstellt und einem Ausgang INT1 mit Unterbrechungssignalen (Interrupt).

Im Weitem wird nun der Inhalt dieses Kommunikationsbausteins 100 beschrieben, wobei die Funktionalität entsprechend des jeweiligen Bussystems respektive der Kommunikationsbaustein hier beispielhaft gewählt ist, eben z.B. als CAN-Kommunikationsbaustein. Die Erfindung kann aber auch auf beliebige andere Kommunikationsbausteine bzw. Kommunikationscontroller sowie andere Bussysteme und Busprotokolle angewendet werden, sodass die gewählte Darstellung in den nachfolgenden Figuren und Ausführungsbeispielen diesbezüglich nicht als einschränkend zu betrachten ist Insbesondere könnte diese auch zweikanalig, beispielsweise für ein FlexRay-Protokoll, ausgeführt sein. Allerdings ist die CAN oder TTCAN Anwendung eine vorteilhafte und bevorzugte Ausführungsform.

Der Kommunikationsbaustein 100 enthält dazu eine Steuereinheit 101, hier insbesondere eine CAN-Steuereinheit oder einen CAN-Core. Daneben ist ein Botschaftsspeicher insbesondere als Messsage-RAM z.B. als single ported RAM mit 102 dargestellt. Ein Dual ported RAM kann z.B. im Rahmen einer zweikanaligen Anwendung z.B. bei FlexRay-Verwendung finden. Mit 105 und 106 sind zwei Zwischen oder Pufferspeicher insbesondere Registerbausteine dargestellt, die zum einen zur Pufferung bezüglich des Daten- bzw. Botschaftstransfers dienen, zum anderen die entsprechende Zuordnung bezüglich des entsprechenden Speicherplatzes im Botschaftsspeicher enthalten können. In dieser Ausführungsform sind zwei Register 105 und 106 dargestellt, wobei dies nur beispielhaft ist und auch nur ein einzelnes Register oder auch ein Register, das entsprechend in zwei Speicherbereiche aufgeteilt ist, Einsatz finden kann. Der Daten- bzw. Botschaftstransfer wird über einen Botschaftsverwalter, den sogenannten Message-Handler 103 gesteuert.

Dabei ist das erste Register 105 (z.B. als CPU IFC Register) mit dem Schnittstellenbaustein 104 sowie der Steuereinheit 101 über Verbindung V11 verbunden. Daneben ist das zweite Register 106 mit dem Schnittstellenbaustein 104 verbunden. Beide Register sind jeweils über Verbindungen V15 und V16 mit dem Message-Handler oder Botschaftsverwalter 103 verbunden. Der Botschaftsverwalter selbst ist über Verbindung V13 mit der Steuereinheit 101 und über V14 mit dem Botschaftsspeicher 102 verbunden. Der eigentliche Botschaftsaustausch bzw. die Botschaftsleitung erfolgt über Verbindung V17, die quasi den ersten Datenpfad (bzw. einen entscheidenden Teil davon) darstellt und die eine Verbindung zwischen Steuereinheit 101, Botschaftsspeicher 102 und den Registern 105 und 106 herstellt.

Wird nun aus den in Figur 1 gezeigten Kommunikationsbausteinen ein Gateway, insbesondere ein CAN-Gateway aufgebaut, so erfordert der Datentransfer, also die Übertragung von Daten und/oder Botschaften zwischen den Kommunikationsbausteinen eine Vielzahl von Lese- und Schreiboperationen, die so wie der Datentransfer über den CPU-Bus (CPU-Interface) abgewickelt werden müssen und somit die Host-CPU, also den Teilnehmer 110 stark belasten und damit die Übertragung verlangsamen.

Mit TX und RX sind die Busanschlüsse, also hier TX1 auf der Sendeseite (transmit) bzw. RX1 empfängerseitig (receive) als Verbindung zu dem Bus 111 dargestellt. Bei einem integrierten Gateway sind diese allerdings dann fest und unflexibel vorgegeben.

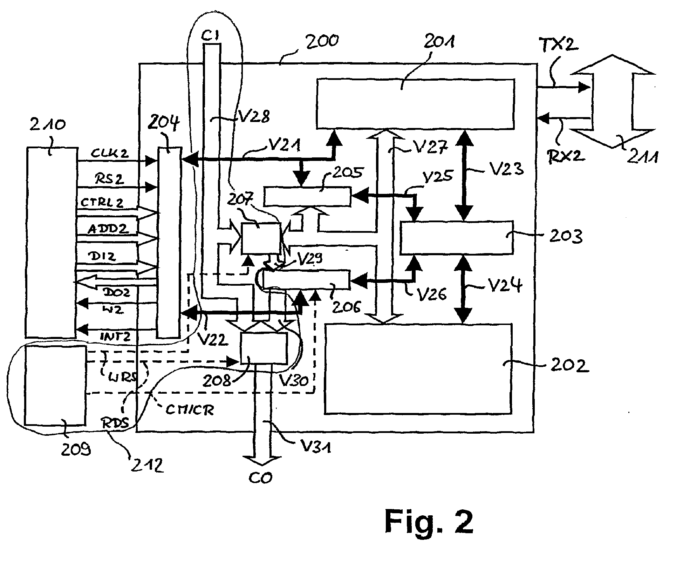

Zur Lösung dieser Problematik ist nun entsprechend Figur 2 ein Kommunikationsschnittstellenelement 212 vorgeschlagen, welches in Verbindung mit dem Kommunikationsbaustein 200 nachfolgend näher erläutert wird. Die bereits zu Figur 1 bei den entsprechenden Teilen 100-111 und V11-V17 gemachten Ausführungen gelten natürlich auch für die diesen entsprechenden Teilen 200-211 (ohne 207-209 und 212) und V21-V27 entsprechend in Figur 2. So stellt Figur 2 im wesentlichen den Kommunikationsbaustein aus Figur 1 mit der entsprechenden erfindungsgemäßen Erweiterung (207-209 und 212 sowie V28-V31) dar, sodass die Ausführungen zu den Figuren 1 und 2 zusammen gesehen werden können.

Der Kommunikationsbaustein 200 verbindet einen Teilnehmer 210 bzw. Host respective eine Host-CPU mit einem Bus 211, wobei die Busanschlüsse mit TX2 und RX2 entsprechend des Sendeausgangs (TX2, transmit) und dem Empfangseingang (RX2, receive) dargestellt sind. Auch dieser Kommunikationsbaustein 200 enthält eine Steuereinheit 201, insbesondere als CAN-Core, einen Botschaftsspeicher 202 insbesondere als Message-RAM, einen Botschaftsverwalter oder Message-Handler 203, die beiden beispielhaften Register, hier mit 205 und 206 bezeichnet (Die Überlegungen zu den Registern 105 und 106 gelten wie oben ausgeführt entsprechend), sowie den Schnittstellenbaustein zum Host 210, hier mit 204 bezeichnet. Der Schnittstellenbaustein erhält Eingänge für den Takt CLK2 (clock), den Reset RS2, einen Steuereingang CTRL2 (control), einen Adresseingang ADD2 und einen Dateneingang DI2. Des weiteren sind Ausgänge DO2 als Datenausgang, ein Wait-Signal W2 und ein Interrupt- oder Unterbrechungsausgang INT2 vorgesehen. Auch in diesem Beispiel ist Register 205 mit der Steuereinheit 201und dem Schnittstellenbaustein 204 hier über die Verbindung V21 gekoppelt. Auch Register 206 ist hier über die Verbindung V22 mit dem Schnittstellenbaustein 204 gekoppelt. Gleichermaßen sind auch hier die beiden beispielhaften Register 205 und 206 über die Verbindungen V25 und V26 mit dem Botschaftsverwalter 203 verbunden. Die Steuereinheit 201 ist über die Verbindung V23 mit dem Botschaftsverwalter 203 und dieser über die Verbindung V24 mit dem Botschaftsspeicher 202 verbunden. Auch hier steuert der Botschaftsverwalter die eigentliche Daten- und/oder Botschaftsübertragung zwischen Bus 211 und Host 210.

Der erste Datenpfad entsprechend Figur 1 V17 ist nun hier mit V27 bezeichnet und enthält insofern eine Besonderheit, als er mit dem Kommunikationsschnittstellenelement 212 also dem Gateway-Interface anstatt mit dem zweiten Register 206 verbunden ist. D.h. das Gateway-Interface ist in den ersten Datenpfad, hier V27, zwischengeschaltet bzw. mit diesem ersten Datenpfad V27 verbunden. Das Kommunikationsschnittstellenelement 212 (Gateway-Interface) greift in den ersten Datenpfad V27 zu dem und von dem Botschaftsspeicher 202 (Message-Memory) ein und hat vorteilhafter Weise die gleiche Wortbreite bezüglich der Übertragung wie der Botschaftsspeicher 202 selbst. Aber auch ein ganzzahliger Teil, insbesondere ein ganzzahliges Vielfaches bezüglich der Wortbreite wäre denkbar. Dabei ist die Daten- und/oder Botschaftsübertragung entsprechend dem jeweiligen Busprotokoll angepasst, z.B. beim CAN eine CAN-Botschaft mit den Steuer- (control) und Status-Bits. Dies ist entsprechend des jeweiligen Bussystems gestaltbar.

Über die Verbindungen V28, V29, V30, V31 sowie Schaltmittel 207 und 208 wird somit im Kommunikationsbaustein 200 ein zusätzlicher zweiter Datenpfad mit einem Eingang CI (Cascade-Input) und einem Ausgang CO (Cascade-Output) realisiert. Dabei sind die in diesem Beispiel dargestellten zwei Schaltmittel 207 und 208 insbesondere als Multiplexer oder Multiplexbausteine ausgebildet. In der hier dargestellten bevorzugten Ausführungsform werden somit zwei Schaltmittel 207 und 208 verwendet, ebenso ist es aber denkbar nur ein Schaltmittel einzusetzen.

Damit können nun vorgebbare Daten und/oder Botschaften des ersten Datenpfades direkt über den zusätzlichen zweiten Datenpfad geleitet werden, ohne die Host-CPU 210 entsprechend dem normalen Datenweg zu belasten.

Die Steuerung dieses zweiten Datenpfades, also zum einen das Übertragen bzw. Leiten der Daten und/oder Botschaften über den zweiten Datenpfad sowie insbesondere die Auswahl oder Vorgabe der vorgebbaren Daten und/oder Botschaften erfolgt über ein Steuerwerk 209, welches insbesondere als Finite-State-Machine, also eine Zustandsmaschine oder einen Zustandsautomaten (endlicher Automat, Finite-State-Machine FSM) ausgebildet ist. Dieses Steuerwerk 209 insbesondere als Zustandsmaschine oder Zustandsautomat kann zum einen im Kommunikationsbaustein 200 selbst untergebracht sein oder kann diesem zugeordnet sein und außerhalb lokalisiert werden. Insbesondere kann sie in einer Ausführungsform im Teilnehmer 210, dem Host, enthalten sein. In einer Ausführungsform ist sie direkt im Gateway-Interface 212 also dem Kommunikationsschnittstellenelement enthalten. Über einen Schreib-Auswahlausgang WRS (Write Select) ist das erste Schaltmittel, der Multiplexbaustein 207, ansteuerbar. Über einen zweiten Ausgang, einen Lese-Steuerungsausgang RDS (Read Select) ist das zweite Schaltmittel, der Multiplexbaustein 208, ansteuerbar. Durch diese Ansteuerung der beiden Multiplexer 207 und 208 in dem zweiten zusätzlichen Datenpfad des Gateway-Interfaces, also des Kommunikationsschnittstellenelements, ist es möglich, den Datentransfer, also die Übertragung der Daten und/oder Botschaften zu steuern, insbesondere die Richtung der Daten und/oder Botschaften bezogen auf den Botschaftsspeicher festzulegen. Die Auswahl oder Vorgabe der auf dem zweiten Datenpfad zu übertragenen Daten kann durch einen weiteren Ausgang CM/CR (Communication Mask/Communication Request) festgelegt werden.

Über CM/CR z.B. mittels Kennungen und insbesondere mit Hilfe eines Command-Request-Registers und eines Command-Mask-Register sowie entsprechende Steuerkennungen oder Steuerbits ist damit und mit den Ausgängen WRS und RDS eine Steuerung der Übertragung über den zweiten Datenpfad sowie die Auswahl bzw. das Vorgeben der entsprechenden Daten und/oder Botschaften für den zweiten Datenpfad möglich. Damit kann das CPU-Interface, also insbesondere Schnittstellenbaustein 204, z.B. mit CPU-Interface-Registem 205 und 206 weiterhin für den Transfer, also die Übertragung von Daten und/oder Botschaften von und zu der lokalen CPU, also der Host-CPU 210, verwendet werden, wobei die Übertragung der vorgebbaren Daten und/oder Botschaften, also deren Transfer über die genannten Steuereingänge WRS, RDS, CM/CR kontrolliert werden.

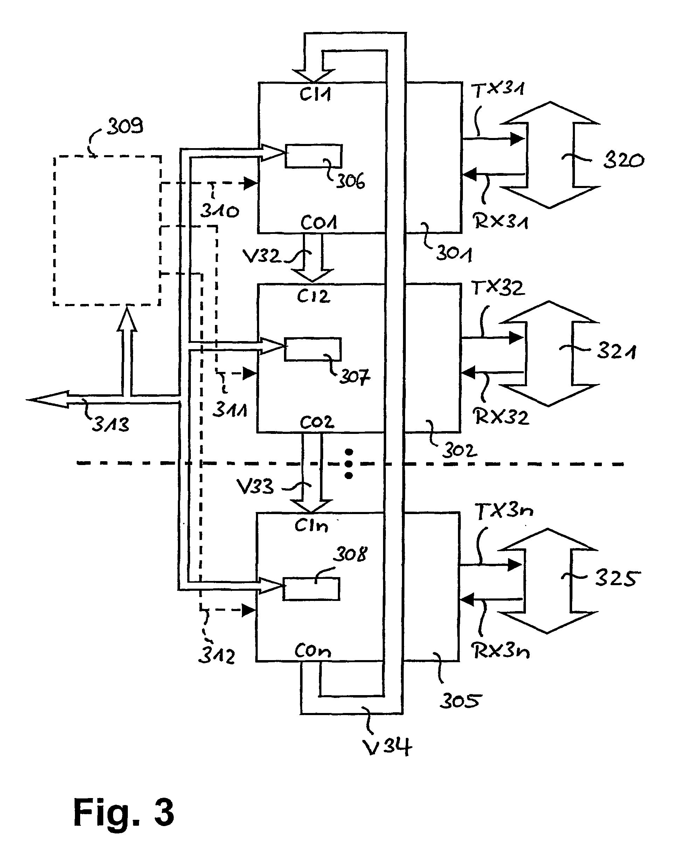

Über diesen so eingeführten zweiten zusätzlichen Datenpfad können nun vorteilhafterweise entsprechend Figur 3 mehrere Kommunikationsbausteine zu einem Gateway, insbesondere kaskadiert, zusammengeschaltet werden. In einer bevorzugten Ausführungsform können somit beliebig viele Kommunikationsbausteine, insbesondere CAN-Module, über das Gateway-Interface, also das Kommunikationsschnittstellenelement zu einem Gateway zusammengeschaltet werden und zweckmäßigerweise ringförmig jeweils von Ausgang CO (Cascade Output) zu Eingang CI (Cascade Input) des nächsten Kommunikationsbausteins verbunden werden. Dies ist auch für andere Bussysteme und auch für unterschiedliche Bussysteme am Gateway möglich.

Derart sind in Figur 3 Kommunikationsbausteine 300, 301 bis 305 beispielsweise als CAN-Module CAN1, CAN2 bis CANn, wobei n eine natürliche Zahl ist, verschaltet. Jeder dieser Kommunikationsbausteine besitzt einen Sendeausgang (TX31, TX32, TX3n) sowie einen Empfangseingang (RX31, RX32, RX3n) zur Verbindung mit einem entsprechenden Bus bzw. einer entsprechenden Kommunikationsverbindung 320, 321 und 325. Über die Verbindungen V32, V33 und V34 sind diese beliebig vielen Kommunikationsbausteine hier insbesondere ringförmig miteinander verschaltet. Eine Sternschaltung o.ä. ist aber ebenso denkbar. Dabei ist die Verbindung V32 von Ausgang CO1 des Kommunikationsbausteins 300 zu Eingang CI2 des Kommunikationsbausteins 301 angeordnet, die Verbindung V33 von CO2 von 301 zu CIn von Kommunikationsbaustein 305 und die Verbindung V34 von dem Ausgang COn des Kommunikationsbausteins 305 zum Eingang CI1 des Kommunikationsbausteins 300 realisiert.

Aus Gründen der Übersichtlichkeit sind nun die Register in Registerblöcke 306, 307 und 308 zusammengefasst und als sogenannte CPU-Interface-Register CPU IFC dargestellt, wobei die Verbindung zur Host-CPU schematisch und übersichtlicher als CPU-Bus 313 dargestellt ist. Die Steuerwerke der einzelnen Kommunikationsbausteine gemäß Figur 2 sind hier in Figur 3 optional als Gateway-Gesamtsteuerwerk, also als Gateway-Finite-State-Machine 309 dargestellt und steuern über die Ausgänge 310, 311 und 312 die Übertragung auf dem zweiten Datenpfad wie vorher beschrieben. D.h. über jede der Verbindungen 310, 311 und 312 werden insbesondere die Ausgänge WRS und RDS und/oder CM/CR entsprechend Figur 2 realisiert. Damit erlaubt es das Gateway-Interface bzw. die über die Kommunikationsschnittstellenelemente verschalteten Kommunikationsbausteine über den zweiten Datenpfad Daten und/oder Botschaften sehr schnell zwischen allen Kommunikationsbausteinen zu transferieren. Insbesondere kann auch eine Botschaft gleichzeitig von einem Kommunikationsbaustein zu mehreren anderen Kommunikationsbausteinen übertragen werden.

Ein solcher Kommunikationsbaustein mit Gateway-Interface, also mit Kommunikationsschnittstellenelement, zur Realisierung eines zweiten zusätzlichen Datenpfades kann sowohl als Teil eines Gateways wie in Figur 3 dargestellt eingesetzt werden als auch als Einzelcontroller oder Einzelbaustein ohne Gateway-Funktion. Auch wenn die Kommunikationsbausteine in der Hardware als Gateway zusammengeschaltet sind, kann durch die Konfiguration der Software eingestellt werden oder auch im Steuerwerk direkt berücksichtigt werden, welche dieser Kommunikationsbausteine als Gateway zusammenarbeiten und welche unabhängig arbeiten, sodass eine sehr flexible und selektive Gateway-Zusammenstellung aus den vorhandenen bzw. gewünschten Kommunikationsbausteinen ermöglicht wird.

Die Steuerung dieser Gateway-Funktion, also welche Botschaft von welchem Bus zu welchem anderen Bus weitergeleitet werden soll, also die Steuerung des zweiten Datenpfades, erfolgt über das genannte Gateway-Steuerwerk 309, also die Gateway-Finite-State-Machine, das entweder als eigene State-Machine in Hardware aufgebaut ist oder auch in Software, insbesondere im Host läuft und über genannte spezielle Register, insbesondere Communication-Request-Register oder Communication-Mask-Register auf die Gateway-Steuereingänge zugreift. Damit ist vorteilhafterweise eine schnelle Datenübertragung und eine hohe Flexibilität, insbesondere freie Konfigurierbarkeit der Anzahl der Busanschlüsse sowie eine hohe Flexibilität bezüglich der Zusammenstellung und des Aufbaus eines Gateways möglich.

## Patentansprüche

1. Anordnung mit wenigstens zwei Kommunikationsbausteinen (200, 301-305), wobei die wenigstens zwei Kommunikationsbausteine jeweils ein Kommunikationsschnittstellenelement (212) enthalten und dem Kommunikationsschnittstellenelement (212) ein Botschaftsspeicher (202) des Kommunikationsbausteins (200) zugeordnet ist und die wenigstens zwei Kommunikationsbausteine jeweils mit einem Datenbus (320-325) verbunden sind, wobei ein erster Datenpfad (V27) zu und von dem Datenbus sowie zu und von dem Botschaftsspeicher vorgesehen ist, über welchen erste Daten und/oder Botschaften zu dem und von dem Botschaftsspeicher (202) geleitet werden, **dadurch gekennzeichnet, dass** im Kommunikationsbaustein ein zusätzlicher zweiter Datenpfad (V28-V31) vorgesehen ist, welcher derart ausgebildet sind, dass die ersten Daten und/oder Botschaften des ersten Datenpfades (V27) wenigstens teilweise über den zusätzlichen zweiten Datenpfad (V28-V31) geleitet werden, wobei das jeweilige Kommunikationsschnittstellenelement einen Eingang (CI, Cl1-Cln) und einen Ausgang (CO, CO1-COn) aufweist womit die wenigstens zwei Kommunikationsbausteine (200, 301-305) über den zweiten Datenpfad zusammengeschaltet werden, so dass sich eine ringförmige Verschaltung (V32-V34) der wenigstens zwei Kommunikationsbausteine im zweiten Datenpfad ergibt.

2. Anordnung nach Anspruch 1, **dadurch gekennzeichnet dass** das Kommunikationsschnittstellenelement (212) mit der gleichen Wortbreite oder einem ganzzahligen Vielfachen der Wortbreite des Botschaftsspeichers (202) arbeitet.

3. Anordnung nach Anspruch 1, **dadurch gekennzeichnet, dass** das Kommunikationsschnittstellenelement ein erstes Schaltmittel (207) und eine zweites Schaltmittel (208) enthält.

4. Anordnung nach Anspruch 1, **dadurch gekennzeichnet, dass** das Schaltmittel (207, 208) als Mültiplexbaustein ausgebildet ist.

5. Anordnung nach Anspruch 1, **dadurch gekennzeichnet, dass** ein Steuerwerk (209) zugeordnet, insbesondere enthalten, ist, welches das Schaltmittel (207, 208) steuert.

6. Anordnung nach Anspruch 4, **dadurch gekennzeichnet, dass** das Steuerwerk (209) die Leitung der Daten und/oder Botschaften über den zweiten zusätzlichen Datenpfad steuert.

7. Anordnung nach Anspruch 4, **dadurch gekennzeichnet, dass** das Steuerwerk (209) In Software oder in Hardware realisiert ist.

8. Anordnung nach Anspruch 6, **dadurch gekennzeichnet, dass** das Steuerwerk als Finite-State-Machine ausgebildet ist.

## Claims

1. Arrangement having at least two communication chips (200, 301-305), wherein the at least two communication chips each contain a communication interface element (212), and the communication interface element (212) has an associated message memory (202) in the communication chip (200), and the at least two communication chips are each connected to a data bus (320-325), wherein a first data path (V27) to and from the data bus and to and from the message memory is provided which is used to route first data and/or messages to and from the message memory (202), **characterized in that** the communication chip contains an additional second data path (V28-V31) which is in a form such that the first data and/or messages on the first data path (V27) are at least to some extent routed via the additional second data path (V28-V31), wherein the respective communication interface element has an input (CI, CI1-CIn) and an output (CO, CO1-COn) which interconnect the at least two communication chips (200, 301-305) via the second data path, so that annular interconnection (V32-V34) of the at least two communication chips in the second data path is obtained.

2. Arrangement according to Claim 1, **characterized in that** the communication interface element (212) uses the same word length or an integer multiple of the word length of the message memory (202).

3. Arrangement according to Claim 1, **characterized in that** the communication interface element contains a first switching means (207) and a second switching means (208).

4. Arrangement according to Claim 1, **characterized in that** the switching means (207, 208) is in the form of a multiplex chip.

5. Arrangement according to Claim 1, **characterized in that** a control unit (209) is associated, particularly contained, which controls the switching means (207, 208).

6. Arrangement according to Claim 4, **characterized in that** the control unit (209) controls the routing of the data and/or the messages via the second additional data path.

7. Arrangement according to Claim 4, **characterized in that** the control unit (209) is implemented in software or in hardware.

8. Arrangement according to Claim 6, **characterized in that** the control unit is in the form of a finite state machine.

## Revendications

1. Arrangement comprenant au moins deux composants de communication (200, 301-305), lesdits au moins deux composants de communication contenant respectivement un élément d'interface de communication (212) et une mémoire de messages (202) du composant de communication (200) étant associée à l'élément d'interface de communication (212) et lesdits au moins deux composants de communication étant respectivement reliés à un bus de données (320-325), un premier chemin de données (V27) étant prévu vers et depuis le bus de données et aussi vers et depuis la mémoire de messages, par le biais duquel des premières données et/ou des premiers messages sont acheminés vers et depuis la mémoire de messages (202), **caractérisé en ce qu'**un deuxième chemin de données (V28-V31) supplémentaire est prévu dans le composant de communication, lequel est configuré de telle sorte que les premières données et/ou les premiers messages du premier chemin de données (V27) sont au moins partiellement acheminés sur le deuxième chemin de données (V28-V31) supplémentaire, l'élément d'interface de communication respectif présentant une entrée (CI, CI1-CIn) et une sortie (CO, CO1-COn) avec lesquelles lesdits au moins deux composants de communication (200, 301-305) sont interconnectés par le biais du deuxième chemin de données de manière à obtenir une connexion en forme d'anneau (V32-V34) desdits au moins deux composants de communication dans le deuxième chemin de données.

2. Arrangement selon la revendication 1, **caractérisé en ce que** l'élément d'interface de communication (212) fonctionne avec la même largeur de mot ou avec un multiple entier de la largeur de mot de la mémoire de messages (202).

3. Arrangement selon la revendication 1, **caractérisé en ce que** l'élément d'interface de communication contient un premier moyen de commutation (207) et un deuxième moyen de commutation (208).

4. Arrangement selon la revendication 1, **caractérisé en ce que** le moyen de commutation (207, 208) est réalisé sous la forme d'un composant de multiplexage.

5. Arrangement selon la revendication 1, **caractérisé en ce qu'**un mécanisme de commande (209) qui commande le moyen de commutation (207, 208) lui est associé, notamment y est inclus.

6. Arrangement selon la revendication 4, **caractérisé en ce que** le mécanisme de commande (209) commande la transmission des données et/ou des messages sur le deuxième chemin de données supplémentaire.

7. Arrangement selon la revendication 4, **caractérisé en ce que** le mécanisme de commande (209) est réalisé en logiciel ou en matériel.

8. Arrangement selon la revendication 6, **caractérisé en ce que** le mécanisme de commande est réalisé sous la forme d'une machine à états finis.
